# EUROPÄISCHE PATENTSCHRIFT

(11) **EP 3 591 342 B1**
(45) Veröffentlichungstag und Bekanntmachung des Hinweises auf die Patenterteilung: **21.07.2021**
(21) Anmeldenummer: 19180514.2
(22) Anmeldetag: 17.06.2019
(51) Int. Cl.: G01D 4/00

(54) **VERFAHREN ZUM BETRIEB EINES MOBILEN AUSLESESYSTEMS**
METHOD FOR OPERATING A MOBILE READ SYSTEM
PROCÉDÉ DE FONCTIONNEMENT D'UN SYSTÈME DE LECTURE MOBILE

(30) Priorität: 05.07.2018 DE 102018005368
(43) Veröffentlichungstag der Anmeldung: 08.01.2020
(73) Patentinhaber: Diehl Metering Systems GmbH, 90451 Nürnberg (DE); Diehl Metering S.A.S., 68300 Saint-Louis (FR)
(72) Erfinder: Bach, Guy, 68640 Waldighoffen (FR); Dockwiller, Bernard, 68720 Saint Bernard (FR); Blank, Thomas, 91732 Merkendorf (DE); Joppich-Dohlus, Petra, 91080 Rathsberg (DE); Kauppert, Thomas, 90455 Nürnberg (DE); Gottschalk, Klaus, 90610 Winkelhaid (DE); Herr, Stefan, 95517 Emtmannsberg (DE); Perrin, Eric, 68420 Obermorschwihr (FR)
(74) Vertreter: Diehl Patentabteilung

(56) Entgegenhaltungen:
- DE-A1-102006 030 533
- FR-A1- 3 050 602
- US-A1- 2011 004 764
- US-A1- 2013 234 863

## Beschreibung

### Verfahren zum Betrieb eines mobilen Auslesesystems

Die vorliegende Erfindung betrifft ein Verfahren zum Betrieb eines mobilen Auslesesystems gemäß dem Oberbegriff des Anspruchs 1. Ferner betrifft die vorliegende Erfindung einen Ausleseempfänger gemäß dem Oberbegriff des Anspruchs 14.

### Technologischer Hintergrund

Die Datenübertragung von Messeinheiten, wie z. B. Sensoren, Verbrauchsmessern, Verbrauchszähler bzw. Verbrauchsdatenerfassungsgeräten oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchszählern, sogenannten Smart Metern. Diese sind in der Regel in ein Versorgungsnetz eingebundene Verbrauchszähler, z. B. für Energie, Strom, Gas oder Wasser, die dem jeweiligen Anschlussbenutzer den tatsächlichen Verbrauch anzeigen. Die Übertragung der Verbrauchsdaten an den Versorger kann auf unterschiedliche Arten erfolgen. Intelligente Verbrauchszähler haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Gattungsgemäße Verbrauchszähler übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich an übergeordnete Datensammler, wie z. B. Ausleseeinheiten, Konzentratoren, Netzwerkknotenpunkte oder Schaltzentralen eines Versorgers. Datentelegramme sind in der Regel aus einer Mehrzahl von Datenpaketen aufgebaut. Die SRD- oder ISM-Frequenzbereiche haben den Vorteil, dass diese lizenzfrei sind und für die Nutzung lediglich eine allgemeine Zulassung der Frequenzverwaltung notwendig ist.

Zur Erfassung der Verbrauchsdaten werden zunehmend intelligente Messinfrastrukturen eingesetzt. In diesen Messinfrastrukturen (Verbrauchsdatenerfassungssysteme) stellen die Verbrauchszähler die Endgeräte dar, durch die an den Verbrauchsstellen Messdaten aufgenommen werden. Die Messdaten werden von den Verbrauchszählern über zwischengeschaltete Datensammler, wie z. B. Ausleseeinheiten, an ein übergeordnetes Managementsystem bzw. Head-End-System übertragen.

Elektronische Verbrauchszähler mit Funksender für drahtlose Datenübertragung werden häufig für eine Walk-In-, Walk-By-, Drive-By- oder Fly-By-Ablesung verwendet. Hierfür werden die Erfassungsgeräte mittels eines mobilen Funkempfängers durch Kundendienstpersonal von einem Fahrzeug aus (Drive-By) im Vorbeifahren oder zu Fuß (Walk-By) im Vorbeigehen abgelesen, ohne dass das abzulesende Gebäude betreten werden muss. Bei den intelligenten Verbrauchszählern ist zum einen der Energieverbrauch, da diese meist batteriegesteuert sind und möglichst lange Wartungsintervalle aufweisen sollen, und zum anderen die Betriebssicherheit von entscheidender Bedeutung. Bei den obigen Ableseverfahren werden häufig über das ganze Jahr hinweg Funktelegramme ausgesendet, auch wenn gerade keine Ablesung durchgeführt wird bzw. sich kein Erfassungsgerät in Reichweite befindet. Es besteht somit ein Bedürfnis, den Stromverbrauch von Verbrauchszählern zu senken bei gleichbleibender Betriebssicherheit.

### Nächstliegender Stand der Technik

Die US 2013/234863 A1 beschreibt ein System zur mobilen Verbrauchsdatenablesung. Hierfür wird eine Aufgabenliste durch einen Head End Server (HES) erstellt und diese an einen Ausleseempfänger übertragen wird. Anschließend werden die Verbrauchszähler auf der Aufgabenliste aufgesucht und in einer Vorbeibewegung durch den Ausleseempfänger die Aufgaben, z. B. die Auslesung von Verbrauchsdaten, durchgeführt.

In der US 2011/0004764 A1 wird ein Verfahren für den sicheren Zugriff auf einen Zähler beschrieben. In einer Ausführungsform wird ein Verfahren zum Bereitstellen einer Berechtigung für einen mobilen Ausleseeinheit für einen Zähler offenbart, die zum Aufbau einer sicheren Sitzung mit einem Zähler verwendet werden kann. Das Verfahren beinhaltet insbesondere das Senden einer Anforderung für die Berechtigung zum Zugriff auf den Zähler über die mobile Ableseeinheit. Wenn die mobile Ableseeinheit über ausreichende Rechte verfügt, wird an einem Host-Computersystem eine Berechtigung mit einer verschlüsselten digitalen Signatur erzeugt und der mobilen Ableseeinheit zur Verfügung gestellt. Anschließend erzeugt und überträgt das Verfahren einen Autorisierungsbefehl an den Zähler mit der kodierten digitalen Signatur, die vom Host-Computersystem erzeugt wurde.

Die DE 10 2006 030533 A1 offenbart die Generierung eines Statusberichts durch den Verbrauchszähler, welcher sich selbst verifiziert und insbesondere durch Betätigen eines Tasters am Verbrauchsmessgerät in einem Display sichtbar gemacht werden kann, um die Validität einer Zähler-Ablesung zu gewährleisten.

In der FR 3 050 602 A1 wird ein Verfahren zum Aufbau einer Kommunikation zwischen einem Gateway und einem Kommunikationsmodul beschrieben. Hierfür wird von einem Gateway in einem Sendefenster periodisch ein Synchronisationssignal ausgesendet. Das Kommunikationsmodul öffnet periodisch ein Empfangsfenster, um bei einem Überlapp des Sendefensters mit dem Empfangsfenster das Synchronisationssignal zu empfangen, damit dieser Überlapp bei gegebenem Arbeitszyklus und begrenzter Zeit aufgrund der Relativbewegung erreicht werden kann.

In der DE 10 2005 034 102 B4 wird ein Verfahren zur Funkübertragung von Daten mehrerer räumlich verteilter Sender von Messgeräten auf einen Empfänger einer mobilen Ausleseeinheit offenbart. Die Daten werden von den Messgeräten selbsttätig über ihren Sender ausgesendet und vom Empfänger der mobilen Ausleseeinheit automatisch empfangen. Allerdings ist keine Einschränkung für die von den Messgeräten ausgesandten Daten vorgesehen, was zu einem hohen Energieverbrauch bei den Messgeräten führt.

### Aufgabe der vorliegenden Erfindung

Die Aufgabe der vorliegenden Erfindung besteht darin, ein neuartiges Verfahren zur Verfügung zu stellen, bei dem bei einer vorteilhaften Energieeffizienz gleichzeitig eine erhöhte Betriebsflexibilität bei verringerter Wartungsintensität und ohne Beeinträchtigung der Betriebssicherheit ermöglicht wird.

### Lösung der Aufgabe

Die vorstehende Aufgabe wird durch die gesamte Lehre des Anspruchs 1 sowie durch einen Ausleseempfänger gemäß Anspruch 14 gelöst. Zweckmäßige Ausgestaltungen der Erfindung sind in den Unteransprüchen beansprucht.

Erfindungsgemäß ist ein Verfahren zum Betrieb eines mobilen Auslesesystems mit mindestens einem stationären Verbrauchszähler und einem mobilen Ausleseempfänger zum Auslesen des Verbrauchszählers in einer Vorbeibewegung des Ausleseempfängers am Verbrauchszähler vorgesehen, wobei zwischen dem Verbrauchszähler und dem Ausleseempfänger eine bidirektionale Kommunikation stattfindet, wobei die bidirektionale Kommunikation folgendes umfasst:
Senden von Statusinformationen, die im Verbrauchszähler gespeichert sind, durch den Verbrauchszähler;
Empfangen der Statusinformationen durch den Ausleseempfänger;
Anforderung weiterer Informationen vom Ausleseempfänger an den Verbrauchszähler mittels eines Requestbefehls;
Verschlüsselte Übertragung von weiteren Informationen vom Verbrauchszähler an den Ausleseempfänger.

Kennzeichnenderweise umfasst die Statusinformation Statuskenndaten und/oder Alarme, insbesondere Alarm-Statuskenndaten, wobei die Statusinformationen keine Verbrauchsdaten umfassen, wobei die weiteren Informationen durch den Ausleseempfänger aufgrund der empfangenen Statusinformationen angefordert werden, und wobei die Relativgeschwindigkeit zwischen dem Verbrauchszähler und dem Ausleseempfänger bis zu 70 Kilometer pro Stunde beträgt.

Der Verbrauchszähler sendet standardmäßig, insbesondere ohne einen vorherigen Requestbefehl, Statusinformationen aus. Diese Statusinformationen können durch den Ausleseempfänger empfangen werden, wodurch dem Ausleseempfänger der aktuelle Zustand des Verbrauchszählers mitgeteilt wird. Somit kann der Ausleseempfänger direkt in Erfahrung bringen, ob der Verbrauchszähler einen besonderen Status aufweist. Aufgrund des übermittelten Status vom Verbrauchszähler an den Ausleseempfänger, kann der Ausleseempfänger weitere Informationen vom Verbrauchszähler anfordern. Die Anforderung erfolgt über einen Requestbefehl, beispielsweise durch ein definiertes Kommando, wie "REQ_UD", welches in der Norm DIN EN 13757-4 bzw. im (wireless) M-Bus definiert ist. Auf den Requestbefehl antwortet der Verbrauchszähler direkt, indem der Verbrauchszähler weitere Informationen an den Ausleseempfänger sendet. Diese weiteren Informationen sind verschlüsselt und werden verschlüsselt übertragen. Die weiteren Informationen können den Status des Verbrauchszählers betreffen. Vom Ausleseempfänger können die weiteren Informationen empfangen und gespeichert werden. Dies hat zum Vorteil, dass der Energiebedarf des Verbrauchszählers sinkt, da keine durchgehende Aussendung aller Daten bzw. Informationen stattfindet. Lediglich Statusinformationen werden durchgehend ausgesandt, welche geringe Datenmengen aufweisen. Somit besteht außerdem nicht die Notwendigkeit, mit jedem Verbrauchszähler eine bidirektionale Kommunikation aufzubauen, was eine Auslesung bei höheren Relativgeschwindigkeiten zwischen Ausleseempfänger und Verbrauchszähler erlaubt. Bei Vorliegen einer Statusinformation bzw. eines Alarms bei einem Verbrauchszähler kann eine bidirektionale Kommunikation aufgebaut werden. Der Requestbefehl kann vorteilhafterweise im Vorfeld definiert worden sein und die zu sendenden weiteren Informationen können bereits vor einer Anfrage durch den Ausleseempfänger vom Verbrauchszähler zusammengestellt und zum Versand bereitgehalten werden. Dies kann zusätzlich zu einer zügigeren Kommunikation und damit höheren Relativgeschwindigkeiten zwischen dem Ausleseempfänger und dem Verbrauchszähler beitragen.

Vorzugsweise können die Statusinformationen unverschlüsselt vom Verbrauchszähler gesendet werden. Durch das Senden der Statusinformationen als unverschlüsselte Nachrichten besteht nicht die Notwendigkeit, dass Schlüssel zur Entschlüsselung im Ausleseempfänger vorgehalten werden. Der Ausleseempfänger kann dadurch direkt den Zustand bzw. das Vorliegen eines speziellen Status im Verbrauchszähler erkennen. Zudem kann eine aufwendige Sicherung von Übertragungsschlüsseln im Ausleseempfänger entfallen.

Zweckmäßigerweise kann das Verfahren zudem umfassen:
Senden von vorzugsweise verschlüsselten Verbrauchsdaten, die im Verbrauchszähler gespeichert sind, durch den Verbrauchszähler;
Empfangen der vorzugsweise verschlüsselten Verbrauchsdaten durch den Ausleseempfänger.

Das Aussenden von Verbrauchsdaten, vorzugsweise von verschlüsselten Verbrauchsdaten kann zweckmäßigerweise unabhängig vom Aussenden von Statusinformationen stattfinden. Somit besteht beispielsweise die Möglichkeit, dass zwischen dem Verbrauchszähler und dem Ausleseempfänger lediglich eine unidirektionale Kommunikation vom Verbrauchszähler zum Ausleseempfänger stattfindet, sofern die Statusinformationen des Verbrauchszählers den Ausleseempfänger nicht veranlassen, weitere Informationen anzufordern.

Erfindungsgemäß umfasst die Statusinformation Statuskenndaten und/oder Alarme, insbesondere Alarm-Statuskenndaten. Der besondere Zustand des Verbrauchszählers kann beispielsweise ein Alarm oder ein Leckagen-Alarm sein. Diese Statusinformationen können in einer möglichen Ausgestaltung unverschlüsselt vom Verbrauchszähler ausgesendet werden.

Indem in der Firmware des Verbrauchszählers hinterlegt ist, welche weiteren Informationen gesendet werden, können die zu sendenden weiteren Informationen vor einem Requestbefehl durch den Ausleseempfänger festgelegt werden. Da das Auslesen des Verbrauchszählers in einer Vorbeibewegung durchgeführt wird, ist bei der bidirektionalen Kommunikation ein zügiger Nachrichtenaustausch wichtig. Durch die Festlegung der zu sendenden weiteren Informationen im Vorfeld kann somit eine schnelle Kommunikation gewährleistet werden. Der Verbrauchszähler kann somit vorteilhafterweise die zu sendenden weiteren Informationen zusammenstellen und zum Senden bereithalten.

Vorteilhafterweise kann der Requestbefehl des Ausleseempfängers an den Verbrauchszähler zum Senden weiterer Informationen unverschlüsselt gesendet werden. Dies hat zum Vorteil, dass die Schlüssel zur Verschlüsselung nicht im Ausleseempfänger hinterlegt sein müssen, was die Sicherheit des Ausleseempfängers erhöht. Zudem besteht nicht die Notwendigkeit Schlüssel zum Entschlüsseln im Verbrauchszähler vorzuhalten und eine Interpretation eines Requestbefehls kann schneller erfolgen.

Zweckmäßigerweise können für den Requestbefehl mindestens zwei Optionen definiert sein, wobei bei jeder Option unterschiedliche weitere Informationen gesendet werden. Als Requestbefehle können beispielsweise zwei definierte Kommandos verwendet werden, wie "REQ_UD1" und "REQ_UD2", welche in der Norm DIN EN 13757-4 bzw. im (wireless) M-Bus definiert sind. Somit besteht die Möglichkeit unterschiedliche weitere Informationen, ja nach Requestbefehl zu senden. Der Ausleseempfänger hat damit zusätzlich die Möglichkeit die weiteren Informationen bedarfsgerecht abzufragen. Beispielsweise können in Abhängigkeit der Statusinformation des Verbrauchszählers unterschiedliche weitere Informationen durch den Ausleseempfänger angefordert werden. Es besteht zudem die Möglichkeit, dass historische Daten vom Verbrauchszähler abgefragt werden.

In einer ersten alternativen Ausgestaltung können die Schlüssel zur Entschlüsselung der Kommunikation im Ausleseempfänger hinterlegt sein. Bei der Verschlüsselung kann es sich z. B. um den Advanced Encryption Standard (AES) handeln. Dabei können die hinterlegten Schlüssel, Schlüssel für die verschlüsselten weiteren Informationen und/oder für die Verschlüsselung des Requestbefehls und/oder für verschlüsselte Statusinformationen umfassen. Somit besteht die Möglichkeit, dass jede Kommunikation verschlüsselt stattfindet.

In einer zweiten alternativen Ausgestaltung können die Schlüssel zur Entschlüsselung der Kommunikation nicht im Ausleseempfänger hinterlegt sein. Die vom Verbrauchszähler empfangenen weiteren Informationen sind verschlüsselt und werden im Ausleseempfänger gespeichert. Da die Schlüssel nicht im Ausleseempfänger hinterlegt sind, können die weiteren Informationen nicht direkt im Ausleseempfänger entschlüsselt werden. Die bidirektionale Kommunikation zwischen Verbrauchszähler und Ausleseempfänger wird dadurch allerdings nicht beeinflusst, da die Statusinformationen vom Verbrauchszähler sowie der Requestbefehl vom Ausleseempfänger unverschlüsselt gesendet werden.

Vorteilhafterweise sind die Schlüssel zur Entschlüsselung der Kommunikation in einem Head-End-System hinterlegt sind. Das Head-End-System kann sich an einem stationären Standort befinden. Die Sicherheit der Schlüssel im Head-End-System kann somit leichter gewährleistet werden, als beispielsweise ein Mitführen der Schlüssel im Ausleseempfänger.

Zweckmäßigerweise können die im Ausleseempfänger gespeicherten weiteren Informationen in das Head-End-System übertragen werden und im Head-End-System entschlüsselt werden. Es besteht somit die Möglichkeit eine "offline"-Diagnose in der zentralen Stelle, wo sich das Head-End-System befindet, durchzuführen.

Es besteht die Möglichkeit, dass die Relativgeschwindigkeit zwischen dem Verbrauchszähler und dem Ausleseempfänger bis zu 50 Kilometer pro Stunde beträgt. Dies hat zum Vorteil, dass das Auslesen nicht von der Geschwindigkeit der Vorbeibewegung abhängig ist.

Zweckmäßigerweise besteht die Möglichkeit, dass die Vorbeibewegung zum Auslesen des Verbrauchszählers nicht unterbrochen wird, insbesondere die Relativgeschwindigkeit ungleich null Kilometer pro Stunde beträgt. Vorteilhafterweise ist es somit nicht notwendig, die Geschwindigkeit bzw. die Fahrweise während des Auslesens durch den Ausleseempfänger anzupassen.

Besonders zweckmäßig ist, dass zum Auslesen die Relativgeschwindigkeit um weniger als 50%, insbesondere um weniger als 20%, insbesondere um weniger als 10% verringert wird, insbesondere keine Verringerung der Relativgeschwindigkeit stattfindet.

Nebengeordnet beansprucht die vorliegende Erfindung zudem einen Ausleseempfänger. Der erfindungsgemäße Ausleseempfänger umfasst einen Empfänger zur Erfassung von Daten mehrerer räumlich verteilter Verbrauchszähler V mittels Funkübertragung und ist gemäß mindestens einem der Verfahrensansprüche betreibbar.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1a-c: vereinfachte schematische Kommunikationen zwischen Verbrauchszähler und Ausleseempfänger während einer Vorbeibewegung;
- Fig. 2: eine vereinfachte schematische Sende- und Empfangssequenz zwischen Verbrauchszähler und Ausleseempfänger;
- Fig. 3: eine vereinfachte schematische Darstellung des Auslesevorgangs mehrerer Verbrauchszähler;
- Fig. 4: eine vereinfachte schematische Darstellung des simultanen Auslesens mehrerer Verbrauchszähler.

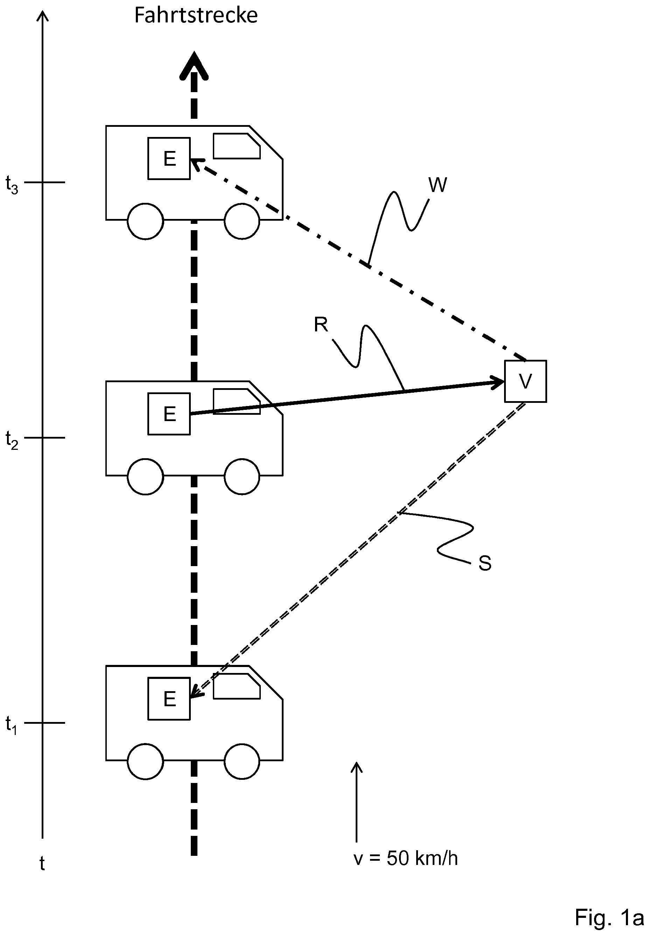

In Fig. 1a ist eine vereinfachte schematische bidirektionale Kommunikation zwischen einem stationären Verbrauchszähler V und einem mobilen Ausleseempfänger E dargestellt. Der mobile Ausleseempfänger befindet sich beispielsweise in einem Fahrzeug. Bei dem Fahrzeug kann es sich z. B. um ein Abfallsammelfahrzeug handeln, welches auf die auf seiner Route befindlichen Verbrauchszähler V ausliest, durch eine sogenannte Drive-By-Ablesung. Das Fahrzeug bewegt sich während der Vorbeibewegung mit einer Geschwindigkeit, die dem gewöhnlichen Verkehrsfluss entspricht. Somit beträgt die Relativgeschwindigkeit zwischen dem Verbrauchszähler V und dem Ausleseempfänger E bis zu 70 Kilometer pro Stunde während der Vorbeibewegung. Zum Auslesen des Verbrauchszählers V muss die Vorbeibewegung nicht unterbrochen werden bzw. es muss nicht angehalten werden. Es besteht auch nicht die Notwendigkeit, die Geschwindigkeit bzw. die Relativgeschwindigkeit während des Auslesens zu verringern.

Der Verbrauchszähler V sendet standardmäßig, bereits vor Eintreffen des Fahrzeugs mit dem Ausleseempfänger E, Statusinformationen S aus. Die Statusinformationen S sind unverschlüsselt und umfassen beispielsweise Statuskenndaten, Alarme und/oder Alarm-Statuskenndaten, wie Leckagen-Alarme. Dabei kann es sich um ein "SND_NR"-Kommando des MBus bzw. wireless MBus handeln. Der Ausleseempfänger E empfängt die Statusinformationen S des Verbrauchszählers V zum Zeitpunkt t₁. Der Ausleseempfänger E überprüft den Inhalt des Status-Bytes in den Statusinformationen S. Sofern ein Alarm-Bit und/oder ein Fehler-Bit (error-bit) gesetzt ist, fordert der Ausleseempfänger E weitere Daten vom Verbrauchszähler V an. Aufgrund der empfangenen Statusinformationen S sendet der Ausleseempfänger E zum Zeitpunkt t₂ einen Requestbefehl R, um weitere Informationen W vom Verbrauchszähler anzufordern. Als Requestbefehl R kann beispielsweise ein "REQ_UD"-Befehl bzw. "REQ_UD1"-Befehl, welcher in der Norm DIN EN 13757-4 bzw. im (wireless) M-Bus definiert ist, verwendet werden. Der Requestbefehl R wird unverschlüsselt vom Ausleseempfänger E an den Verbrauchszähler V gesendet. In der Firmware des Verbrauchszählers V ist hinterlegt, welche weiteren Informationen W als Antwort auf den Requestbefehl R gesendet werden. Die weiteren Informationen W werden zum Zeitpunkt t₃ verschlüsselt mittels einer verschlüsselten "RSP_UD"-Nachricht gesendet. Der Verbrauchzähler V ist hergerichtet, um eine spezielle weitere Information W, in einer "RSP_UD"-Nachricht als Antwort auf eine Anfrage durch ein "REQ_UD1"-Kommando zu senden. Im Ausleseempfänger E werden die verschlüsselten weiteren Informationen W empfangen und gespeichert. Der Ausleseempfänger E verfügt selbst nicht über die Schlüssel zu Entschlüsselung der verschlüsselten weiteren Informationen W. Für die gesamte bidirektionale Kommunikation zwischen dem Verbrauchszähler V und dem Ausleseempfänger E werden somit keine Schlüssel im Ausleseempfänger E benötigt. Es besteht zudem die Möglichkeit, einen "frequent acces cycle" (FAC) für Wiederholungen mit N=1 zu verwenden. Um den FAC zu beenden wird ein "SND_NKE"-Befehl gesendet.

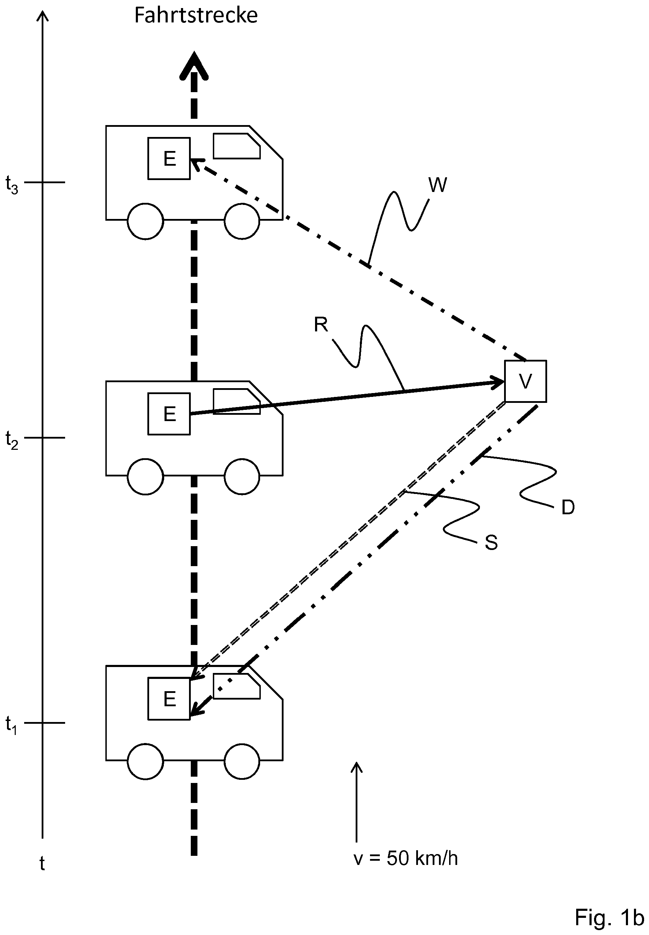

Neben den Statusinformationen S sendet der Verbrauchszähler V in Fig. 1b zusätzlich Verbrauchsdaten D. Die Verbrauchsdaten D werden vom Ausleseempfänger E empfangen und gespeichert. Vorzugsweise sind die Verbrauchsdaten D verschlüsselt bzw. werden verschlüsselt übertragen.

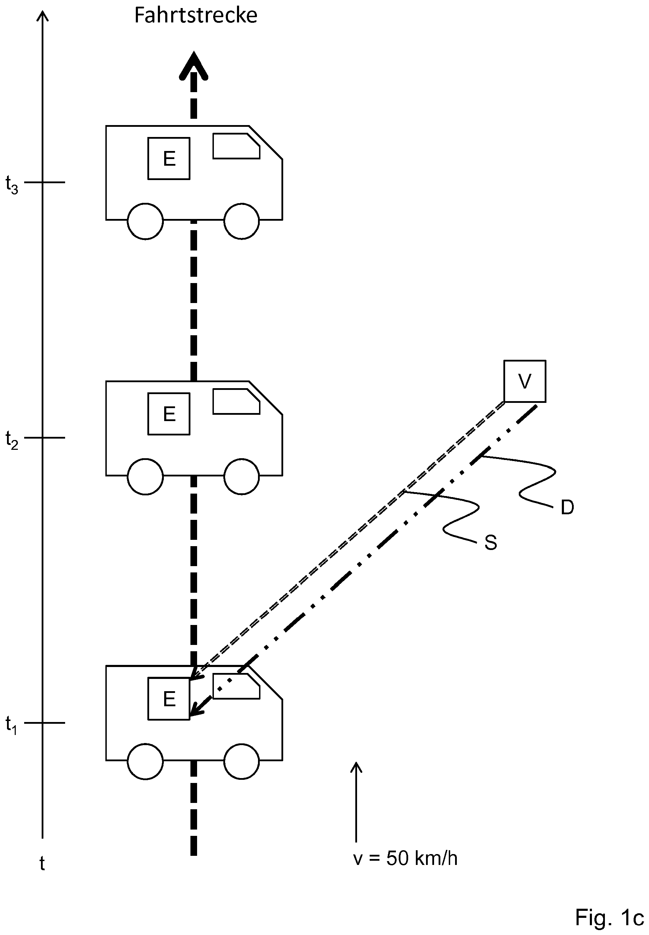

In Fig. 1c findet zwischen dem Verbrauchszähler V und dem Ausleseempfänger E eine unidirektionale Kommunikation vom Verbrauchszähler V zum Ausleseempfänger E statt. Es werden Statusinformationen S sowie Verbrauchsdaten D vom Verbrauchszähler V ausgesendet und vom Ausleseempfänger E empfangen. Die empfangenen Statusinformationen S veranlassen den Ausleseempfänger E nicht, weitere Informationen W mittels eines Requestbefehls R anzufordern.

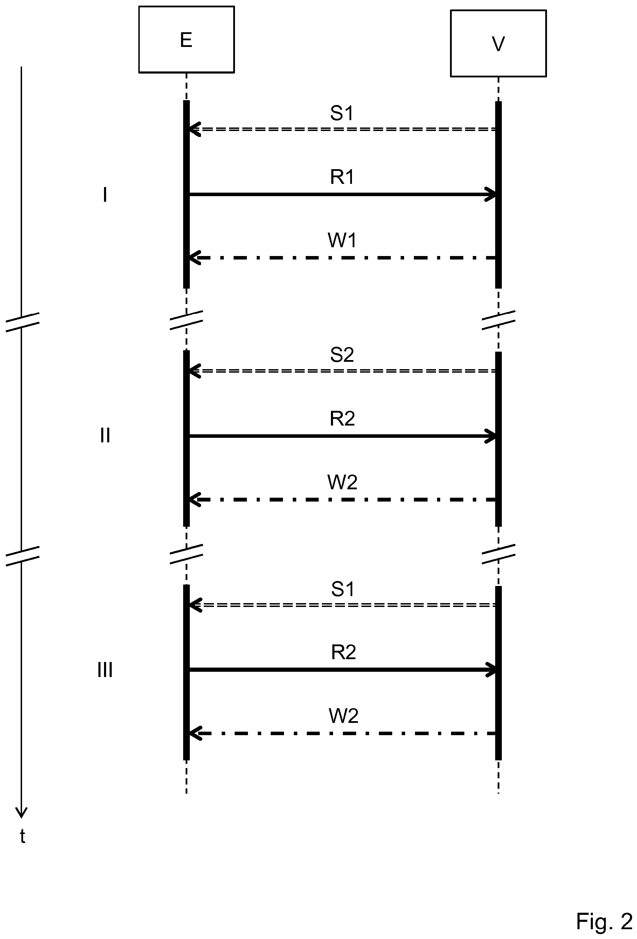

Fig. 2 zeigt eine vereinfachte schematische Sende- und Empfangssequenz zwischen einem Verbrauchszähler V und einem Ausleseempfänger E. In einer ersten Sequenz I sendet der Verbrauchszähler V einen Alarm als Statusinformation S1 aus. Die Statusinformation S1 wird vom Ausleseempfänger E empfangen. Aufgrund der Art der Statusinformation S1 bzw. der Art des Alarms, sendet der Ausleseempfänger E einen Requestbefehl R1 an den Verbrauchszähler V. Bei dem Requestbefehl R kann es sich beispielsweise um ein "REQ_UD"-Kommando des MBus bzw. wireless MBus handeln. Ferner sind für den Requestbefehl R verschiedene Optionen definiert. Die unterschiedlichen Requestbefehle R1 und R2 führen zu unterschiedlichen Antworten des Verbrauchszählers V, wobei es sich hier beispielsweise um die Kommandos "REQ_UD1" und "REQ_UD2" des MBus bzw. wireless MBus handeln kann. So antwortet der Verbrauchszähler V in der ersten Sequenz I auf den Requestbefehl R1 mit weiteren Informationen W1. Der Ausleseempfänger E fordert entsprechend der erhaltenen Statusinformation S1 weitere Informationen W1 mittels eines entsprechenden Requestbefehls R1 an.

Sofern der Verbrauchszähler V, wie in der zweiten Sequenz II, andere Statusinformationen S2 sendet, kann der Ausleseempfänger E einen anderen Requestbefehl R2 senden. So kann es sich bei den Statusinformationen S2 beispielsweise um einen Leckagen-Alarm handeln. Für einen solchen Leckagen-Alarm benötigt der Ausleseempfänger E weitere Informationen W2, welche sich von denen für einen anderen Alarm unterscheiden, wie z. B. von jenen weiteren Informationen W1 bei Vorliegen der Statusinformationen S1 in der ersten Sequenz I. Um die weiteren Informationen W2 anzufordern, sendet der Ausleseempfänger E entsprechend einen Requestbefehl R2. In der Firmware des Verbrauchszählers V ist hinterlegt, welche weiteren Informationen W bei entsprechendem Requestbefehl R ausgesendet werden.

In einer dritten Sequenz III sendet der Verbrauchszähler V Statusinformationen S1 wie in der ersten Sequenz I aus. Allerdings kann der Ausleseempfänger E weitere Informationen W2 anfordern, welche sich von den angeforderten weiteren Informationen W1 in der ersten Sequenz I unterscheiden. So sendet der Ausleseempfänger E den Requestbefehl R2 an den Verbrauchszähler V nach Erhalt der Statusinformationen S1. Der Verbrauchszähler V antwortet mit der Übertragung von weiteren Informationen W2.

In einer Ausgestaltung werden die Statusinformationen S1 und S2 sowie die Requestbefehle R1 und R2 unverschlüsselt zwischen Verbrauchszähler V und Ausleseempfänger E versendet. Die weiteren Informationen W1 und W2 werden dagegen vom Verbrauchszäher V verschlüsselt an den Ausleseempfänger E gesendet.

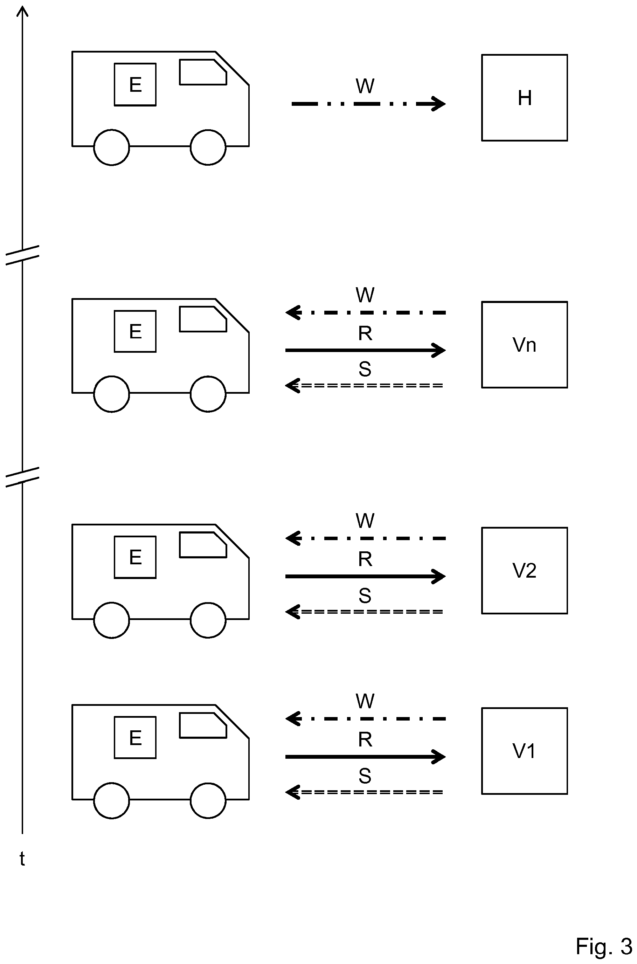

In Fig. 3 ist ein vereinfachter schematischer Auslesevorgang mehrerer Verbrauchszähler V1 bis Vn gezeigt. Jede Kommunikation zwischen dem Ausleseempfänger E und einem Verbrauchszähler V1 bis Vn folgt dem gleichen Ablauf. Der Verbrauchszähler V1 bis Vn sendet Statusinformationen S aus, welche der Ausleseempfänger E empfängt. Ein Requestbefehl R wird vom Ausleseempfänger E an den jeweiligen Verbrauchszähler V1 bis Vn gesendet, entsprechend der zuvor empfangenen Statusinformationen S. Der jeweilige Verbrauchszähler V1 bis Vn sendet daraufhin weitere Informationen W verschlüsselt an den Ausleseempfänger E. Der Ausleseempfänger E speichert die weiteren Informationen W ab.

In einer ersten Ausgestaltung verfügt der Ausleseempfänger E selbst über die nötigen Schlüssel, um die verschlüsselten weiteren Informationen W zu entschlüsseln. Es können somit die weiteren Informationen W direkt im Ausleseempfänger E entschlüsselt werden. Ferner besteht die Möglichkeit, dass die Übertragung der Statusinformationen S sowie die Requestbefehle R zusätzlich verschlüsselt stattfindet.

In einer zweiten Ausgestaltung verfügt der Ausleseempfänger E selbst nicht über die nötigen Schlüssels zur Entschlüsselung der weiteren Informationen W. Die empfangenen verschlüsselten weiteren Informationen W werden im Ausleseempfänger E in ihrer verschlüsselten Form abgespeichert. Die Statusinformationen S und die Requestbefehle R werden unverschlüsselt übertragen. Nach einer Auslese-Tour werden die im Ausleseempfänger E abgespeicherten verschlüsselten weiteren Informationen W der Verbrauchszähler V1 bis Vn an ein Head-End-System H übertragen. Im Head-End-System H sind die Schlüssel zur Entschlüsselung der weiteren Informationen W hinterlegt. Die Übertragung vom Ausleseempfänger E an das Head-End-System H kann beispielsweise drahtlos über Funk und/oder mittels einer optischen Schnittstelle und/oder drahtgebunden stattfinden.

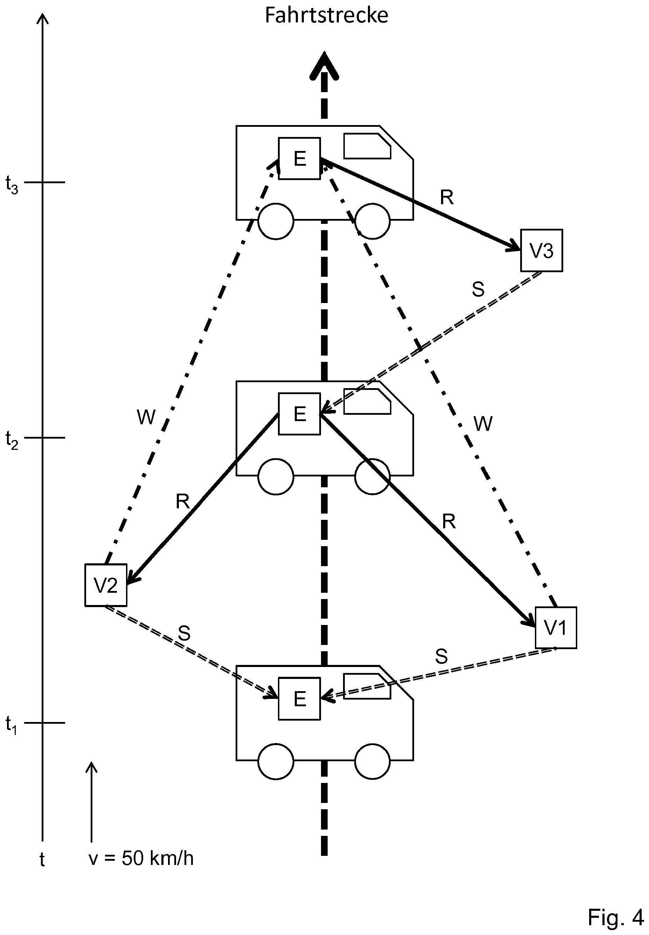

Eine vereinfachte schematische Darstellung des simultanen Auslesens mehrerer Verbrauchszähler V1 bis V3 ist in Fig. 4 gezeigt. Der Ausleseempfänger E befindet sich in einem Fahrzeug, welches sich mit einer Geschwindigkeit von 50 Kilometern pro Stunde entlang einer Fahrtstrecke bewegt. Entlang der Fahrtstrecke befindet sich eine Mehrzahl an Verbrauchszählern V1 bis V3. Die Verbrauchszähler V1 bis V3 senden standardmäßig Statusinformationen S aus, unabhängig von der Anwesenheit des Ausleseempfängers E. Auf der Fahrtstrecke empfängt der Ausleseempfänger E zum Zeitpunkt t₁ zunächst die Statusinformationen S des Verbrauchszählers V1 und anschließend die Statusinformationen S des Verbrauchszählers V2. Aufgrund der empfangenen Statusinformationen S der Verbrauchszähler V1 und V2 sendet der Ausleseempfänger E jeweils einen Requestbefehl R zum Zeitpunkt t₂ aus. Zur selben Zeit empfängt der Ausleseempfänger E bereits die Statusinformationen S des Verbrauchszählers V3. Anschließend wird zum Zeitpunkt t₃ vom Ausleseempfänger E ein Requestbefehl R an den Verbrauchszähler V3 gesendet, was mit dem Empfang der weiteren Informationen W der Verbrauchszähler V1 und V2 zeitlich zusammenfällt. Der Ausleseempfänger E kann mehrere Statusinformationen S und weitere Informationen W gleichzeitig empfangen und Requestbefehle R versenden. Zudem besteht die Möglichkeit, dass der Ausleseempfänger E gleichzeitig sendet und empfängt.

### BEZUGSZEICHENLISTE

- V: Verbrauchszähler
- E: Ausleseempfänger
- S: Statusinformationen
- W: weitere Informationen
- R: Requestbefehl
- H: Head-End-System
- D: Verbrauchsdaten

## Patentansprüche

1. Verfahren zum Betrieb eines mobilen Auslesesystems mit mindestens einem stationären Verbrauchszähler (V) und
einem mobilen Ausleseempfänger (E) zum Auslesen des Verbrauchszählers (V) in einer Vorbeibewegung des Ausleseempfängers (E) am Verbrauchszähler (V), wobei
zwischen dem Verbrauchszähler (V) und dem Ausleseempfänger (E) eine bidirektionale Kommunikation stattfindet, wobei
die bidirektionale Kommunikation folgendes umfasst:
Senden von Statusinformationen (S), die im Verbrauchszähler (V) gespeichert sind, durch den Verbrauchszähler (V);
Empfangen der Statusinformationen (S) durch den Ausleseempfänger (E);
Anforderung weiterer Informationen (W) vom Ausleseempfänger (E) an den Verbrauchszähler (V) mittels eines Requestbefehls (R);
Verschlüsselte Übertragung von weiteren Informationen (W) vom Verbrauchszähler (V) an den Ausleseempfänger (E),
**dadurch gekennzeichnet, dass**
die Statusinformationen (S) Statuskenndaten und/oder Alarme, insbesondere Alarm-Statuskenndaten, umfassen, wobei
die Statusinformationen (S) keine Verbrauchsdaten umfassen, wobei
die weiteren Informationen (W) durch den Ausleseempfänger (E) aufgrund der empfangenen Statusinformationen (S) angefordert werden, und wobei
die Relativgeschwindigkeit zwischen dem Verbrauchszähler (V) und dem Ausleseempfänger (E) bis zu 70 Kilometer pro Stunde beträgt.

2. Verfahren nach Anspruch 1, **dadurch gekennzeichnet, dass** die Statusinformationen (S) unverschlüsselt vom Verbrauchszähler (V) gesendet werden.

3. Verfahren nach mindestens einem der Ansprüche 1 oder 2, **dadurch gekennzeichnet, dass** das Verfahren zudem umfasst:
Senden von vorzugsweise verschlüsselten Verbrauchsdaten (D), die im Verbrauchszähler (V) gespeichert sind, durch den Verbrauchszähler (V);
Empfangen der vorzugsweise verschlüsselten Verbrauchsdaten (D) durch den Ausleseempfänger (E).

4. Verfahren nach mindestens einem der vorhergehenden Ansprüche, **dadurch gekennzeichnet, dass** in der Firmware des Verbrauchszählers (V) hinterlegt ist, welche weiteren Informationen (W) gesendet werden.

5. Verfahren nach mindestens einem der vorhergehenden Ansprüche, **dadurch gekennzeichnet, dass** der Requestbefehl (R) des Ausleseempfängers (E) an den Verbrauchszähler (V) zum Senden weiterer Informationen (W) unverschlüsselt gesendet wird.

6. Verfahren nach mindestens einem der vorhergehenden Ansprüche, **dadurch gekennzeichnet, dass** für den Requestbefehl (R) mindestens zwei Optionen definiert sind, wobei bei jeder Option unterschiedliche weitere Informationen (z. B. W1 und W2) gesendet werden.

7. Verfahren nach mindestens einem der vorhergehenden Ansprüche, **dadurch gekennzeichnet, dass** die Schlüssel zur Entschlüsselung der Kommunikation im Ausleseempfänger (E) hinterlegt sind.

8. Verfahren nach mindestens einem der Ansprüche 1 bis 6, **dadurch gekennzeichnet, dass** die Schlüssel zur Entschlüsselung der Kommunikation nicht im Ausleseempfänger (E) hinterlegt sind.

9. Verfahren nach Anspruch 8, **dadurch gekennzeichnet, dass** die Schlüssel zur Entschlüsselung der Kommunikation in einem Head-End-System (H) hinterlegt sind.

10. Verfahren nach Anspruch 9, **dadurch gekennzeichnet, dass** die im Ausleseempfänger (E) gespeicherten weiteren Informationen in das Head-End-System (H) übertragen werden und im Head-End-System (H) entschlüsselt werden.

11. Verfahren nach mindestens einem der vorhergehenden Ansprüche, **dadurch gekennzeichnet, dass** die Relativgeschwindigkeit zwischen dem Verbrauchszähler (V) und dem Ausleseempfänger (E) bis zu 50 Kilometer pro Stunde beträgt.

12. Verfahren nach mindestens einem der vorhergehenden Ansprüche, **dadurch gekennzeichnet, dass** die Vorbeibewegung zum Auslesen des Verbrauchszählers (V) nicht unterbrochen wird, insbesondere die Relativgeschwindigkeit ungleich null Kilometer pro Stunde beträgt.

13. Verfahren nach mindestens einem der Ansprüche 11 bis 12, **dadurch gekennzeichnet, dass** zum Auslesen die Relativgeschwindigkeit um weniger als 50%, insbesondere um weniger als 20%, insbesondere um weniger als 10% verringert wird, insbesondere keine Verringerung der Relativgeschwindigkeit stattfindet.

14. Ausleseempfänger E, mit einem Empfänger zur Erfassung von Daten mehrerer räumlich verteilter Verbrauchszähler V mittels Funkübertragung, **dadurch gekennzeichnet, dass** der Ausleseempfänger E gemäß einem Verfahren nach mindestens einem der vorhergehenden Ansprüche betreibbar ist.

## Claims

1. Method for operating a mobile readout system with
at least one stationary consumption meter (V), and
a mobile readout receiver (E) to read out the consumption meter (V) as the readout receiver (E) moves past the consumption meter (V), wherein
two-way communication takes place between the consumption meter (V) and the readout receiver (E), wherein
the two-way communication comprises the following:
transmission by the consumption meter (V) of status information (S) which is stored in the consumption meter (V);
reception of the status information (S) by the readout receiver (E);
requesting by the readout receiver (E) of additional information (W) from the consumption meter (V) by means of a request command (R);
encrypted transmission of additional information (W) from the consumption meter (V) to the readout receiver (E),
**characterized in that**
the status information (S) comprises characteristic status data and/or alarms, in particular characteristic alarm status data, wherein
the status information (S) does not comprise any consumption data, wherein
the additional information (W) is requested by the readout receiver (E) on the basis of the received status information (S), and wherein
the relative speed between the consumption meter (V) and the readout receiver (E) is up to 70 kilometres per hour.

2. Method according to Claim 1, **characterized in that** the status information (S) is transmitted by the consumption meter (V) in unencrypted form.

3. Method according to at least either of Claims 1 and 2, **characterized in that** the method furthermore comprises:
transmission by the consumption meter (V) of preferably encrypted consumption data (D) which are stored in the consumption meter (V);
reception by the readout receiver (E) of the preferably encrypted consumption data (D).

4. Method according to at least one of the preceding claims, **characterized in that** an indication of which additional information (W) is transmitted is stored in the firmware of the consumption meter (V).

5. Method according to at least one of the preceding claims, **characterized in that** the request command (R) from the readout receiver (E) to the consumption meter (V) for the transmission of additional information (W) is transmitted in unencrypted form.

6. Method according to at least one of the preceding claims, **characterized in that** at least two options are defined for the request command (R), wherein different additional information elements (e.g. W1 and W2) are transmitted in the case of each option.

7. Method according to at least one of the preceding claims, **characterized in that** the keys for decrypting the communication are stored in the readout receiver (E).

8. Method according to at least one of Claims 1 to 6, **characterized in that** the keys for decrypting the communication are not stored in the readout receiver (E).

9. Method according to Claim 8, **characterized in that** the keys for decrypting the communication are stored in a head-end system (H).

10. Method according to Claim 9, **characterized in that** the additional information stored in the readout receiver (E) is transferred into the head-end system (H) and is decrypted in the head-end system (H).

11. Method according to at least one of the preceding claims, **characterized in that** the relative speed between the consumption meter (V) and the readout receiver (E) is up to 50 kilometres per hour.

12. Method according to at least one of the preceding claims, **characterized in that** the passing movement for the readout of the consumption meter (V) is not interrupted, in particular the relative speed is not equal to zero kilometres per hour.

13. Method according to at least one of Claims 11 to 12, **characterized in that** the relative speed is reduced for the readout by less than 50%, in particular by less than 20%, in particular by less than 10%, in particular no reduction of the relative speed takes place.

14. Readout receiver (E), having a receiver to acquire data from a plurality of spatially distributed consumption meters (V) by means of radio transmission, **characterized in that** the readout receiver (E) is operable using a method according to at least one of the preceding claims.

## Revendications

1. Procédé d'exploitation d'un système de lecture mobile comportant
au moins un compteur de consommation stationnaire (V) et un récepteur de lecture mobile (E) pour lire le compteur de consommation (V) lors d'un déplacement du récepteur de lecture (E) devant le compteur de consommation (V), dans lequel
une communication bidirectionnelle a lieu entre le compteur de consommation (V) et le récepteur de lecture (E), dans lequel
la communication bidirectionnelle comprend :
l'envoi d'informations d'état (S) stockées dans le compteur de consommation (V) par le compteur de consommation (V) ;
la réception des informations d'état (S) par le récepteur de lecture (E) ;
la demande d'informations supplémentaires (W) par le récepteur de lecture (E) au compteur de consommation (V) au moyen d'une commande de demande (R) ;
la transmission cryptée d'autres informations (W) du compteur de consommation (V) au récepteur de lecture (E), **caractérisé en ce que**
les informations d'état (S) comprennent des données caractéristiques d'état et/ou des alarmes, en particulier des données caractéristiques d'état d'alarme, dans lequel les informations d'état (S) ne comprennent pas de données de consommation, dans lequel
les informations supplémentaire (W) sont demandées par le récepteur de lecture (E) sur la base des informations d'état reçues (S), et dans lequel
la vitesse relative entre le compteur de consommation (V) et le récepteur de lecture (E) peut atteindre 70 kilomètres par heure.

2. Procédé selon la revendication 1, **caractérisé en ce que** les informations d'état (S) sont envoyées en clair par le compteur de consommation (V).

3. Procédé selon au moins l'une des revendications 1 ou 2, **caractérisé en ce que** le procédé comprend en outre :
l'envoi par le compteur de consommation (V) de données de consommation (D), de préférence cryptées, stockées dans le compteur de consommation (V) ;
la réception des données de consommation (D), de préférence cryptées, par le récepteur de lecture (E).

4. Procédé selon au moins l'une des revendications précédentes, **caractérisé en ce que** le microprogramme du compteur de consommation (V) mémorise quelles informations supplémentaires (W) sont envoyées.

5. Procédé selon au moins l'une des revendications précédentes, **caractérisé en ce que** la commande de requête (R) du récepteur de lecture (E) au compteur de consommation (V) sont envoyées en clair pour l'envoi d'informations supplémentaires (W).

6. Procédé selon au moins l'une des revendications précédentes, **caractérisé en ce qu'**au moins deux options sont définies pour la commande de requête (R), dans lequel différentes informations complémentaires (par exemple W1 et W2) sont envoyées pour chaque option.

7. Procédé selon au moins l'une des revendications précédentes, **caractérisé en ce que** les clés de décryptage de la communication sont stockées dans le récepteur de lecture (E).

8. Procédé selon au moins l'une des revendications 1 à 6, **caractérisé en ce que** les clés de décryptage de la communication ne sont pas stockées dans le récepteur de lecture (E).

9. Procédé selon la revendication 8, **caractérisé en ce que** les clés de décryptage de la communication sont stockées dans un système de tête de réseau (H).

10. Procédé selon la revendication 9, **caractérisé en ce que** les autres informations stockées dans le récepteur de lecture (E) sont transmises au système de tête de réseau (H) et décryptées dans le système de tête de réseau (H) .

11. Procédé selon au moins l'une des revendications précédentes, **caractérisé en ce que** la vitesse relative entre le compteur de consommation (V) et le récepteur de lecture (E) peut atteindre 50 kilomètres par heure.

12. Procédé selon au moins l'une des revendications précédentes, **caractérisé en ce que** le déplacement de passage permettant la lecture du compteur de consommation (V) n'est pas interrompu, en particulier la vitesse relative est différente de zéro kilomètre par heure.

13. Procédé selon au moins l'une des revendications 11 à 12, **caractérisé en ce que** pour la lecture, la vitesse relative est réduite de moins de 50%, notamment de moins de 20%, notamment de moins de 10%, notamment aucune réduction de la vitesse relative n'a lieu.

14. Récepteur de lecture E, comportant un récepteur destiné à l'acquisition de données de plusieurs compteurs de consommation V répartis dans l'espace au moyen d'une transmission radio,
**caractérisé en ce que** le récepteur de lecture E peut être amené à fonctionner conformément à un procédé selon au moins l'une des revendications précédentes.
